(19)

**Europäisches Patentamt**
**European Patent Office**
**Office européen des brevets**

(11) **EP 2 541 478 A1**

(12) **EUROPEAN PATENT APPLICATION**

(43) Date of publication:
**02.01.2013  Bulletin 2013/01**

(51) Int Cl.:
***G06Q 20/00*** *(2012.01)*

(21) Application number: **11305821.8**

(22) Date of filing: **27.06.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Accenture Global Services Limited
Dublin 4 (IE)**

(72) Inventors:
• **Light, Jeremy
London, SW1W 9TB (GB)**

• **Hasson, Robert
06600 Antibes (FR)**
• **Viale, Emmanuel
06800 Cagnes Sur Mer (FR)**

(74) Representative: **de Beaumont, Michel et al
1bis, rue Champollion
38000 Grenoble (FR)**

Remarks:
Amended claims in accordance with Rule 137(2)
EPC.

(54) **Dynamic electronic money**

(57)    The invention concerns a method of making an electronic payment by an electronic payment device comprising: transmitting from said electronic payment device (206) to an electronic receiving device (208, 210) a first money token (204) comprising at least data indicating an identifier of said first money token and an amount indicating a payment sum of said first money token, wherein said first money token further comprises an electronic watermark.

Fig 2

## Description

### FIELD

The present disclosure relates to the field of electronic money payments and also to a device, system and method for making an electronic money payment.

### BACKGROUND

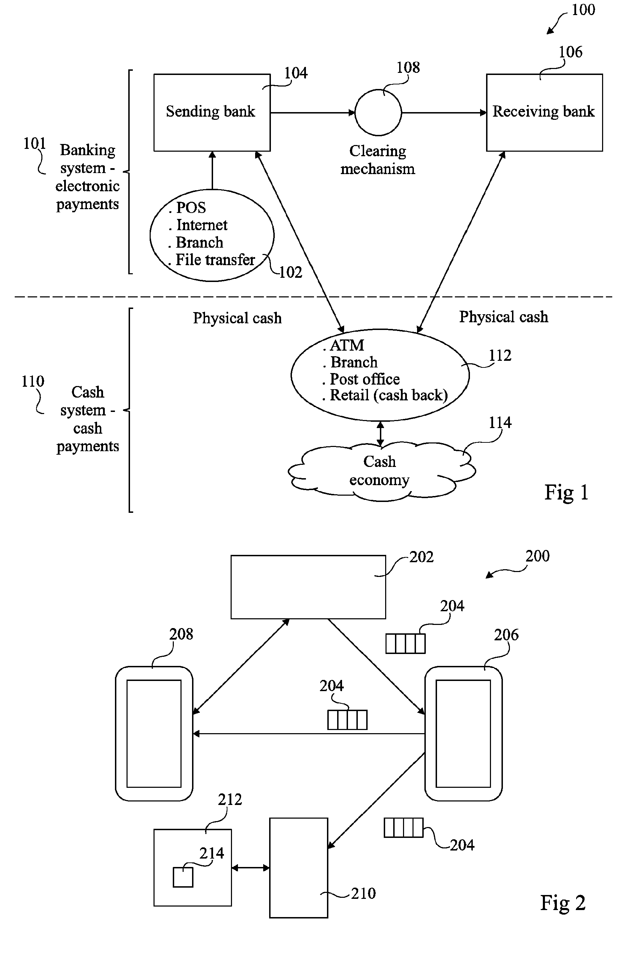

Figure 1 illustrates an example of a system 100 for electronic and cash payments. As illustrated, the electronic payment part 101 of the system comprises a number of transaction locations 102, at which electronic payments may be initiated, for example using a payment card such as a credit or debit card, or by generating an electronic payment instruction. These locations include for example points of sale (POS), which may be the sales desk of a shop or the check-out till of a supermarket, the internet, for example via a PC (personal computer) or mobile device with internet access, a bank branch, or via a file transfer, for example by transmitting a payment instruction to a bank, via email, fax or electronic data file.

These electronic payment instructions are received by the sending bank 104, in other words the bank that manages the account containing the payment funds. The funds are then transmitted to the receiving bank 106 via a clearing mechanism 108. The clearing mechanism 108 for example performs the necessary actions to process the payment instruction, and ensure that the funds are transferred and settled. The clearing mechanism 108 also for example routes authorization requests to the sending bank 104 to check that funds are available, reserves the funds, and provides a confirmation to the receiving bank 106.

The cash payment part 110 of the system 100 receives and/or deposits physical cash from/to the sending and receiving banks 104, 106, via a cash distribution facility 112, for example an ATM (automated teller machine), a bank branch, post office or retail outlet that offers cash back. The cash may then be used for making payments in the cash economy 114, for example in shops, restaurants etc. that accept cash payment.

Physical cash has a number of technical problems, such as the fact that it is a relatively bulky form of payment, in particular in the case of metal coins, when compared to electronic payment means such as bank/credit cards.

However, electronics payments have the technical problem of requiring a clearing and settlement operation, which is relatively time consuming and complex to implement.

There is thus a need for a new type of electronic payment method and device that does not suffer from these problems. In particular, there is a need for an electronic payment method and device that allows money to be exchanged as easily as physical cash, and without the need of a clearing and settlement infrastructure.

## SUMMARY OF THE PRESENT DISCLOSURE

It is an aim of embodiments described herein to at least partially address one or more needs in the prior art.

According to one aspect of the present disclosure, there is provided a method of making an electronic payment by an electronic payment device comprising: transmitting from said electronic payment device to an electronic receiving device a first money token comprising at least data indicating an identifier of said first money token and an amount indicating a payment sum of said first money token, wherein said first money token further comprises an electronic watermark.

According to one embodiment, said first money token comprises an algorithm that determines said payment amount of said first money token based on at least one parameter external to said first money token.

According to another embodiment, said electronic watermark comprises data of said first money token encrypted by an algorithm not known by said electronic payment and electronic receiving devices.

According to another embodiment, the method further comprises: transmitting by said electronic receiving device said electronic watermark to an authentication module; and decrypting said electronic watermark by said authentication module to verify that said first money token is authentic.

According to another embodiment, decrypting said electronic watermark comprises performing a hash function.

According to another embodiment, the method further comprises, prior to transmitting said money token, the step of: splitting by said electronic payment device a second money token to generate said first money token and a third money token having a value equal to the difference between said first payment sum and a value of said second token.

According to another embodiment, splitting said second money token comprises including in said first and third money tokens an identifier of said second money token and an electronic watermark of said second money token.

According to another embodiment, the method further comprises receiving by said electronic payment device said second money token from token distribution equipment.

According to another embodiment, the method further comprises generating said second money token by combining fourth and fifth money tokens.

According to another embodiment, the method further comprises splitting a second money token to generate a third money token, and combining said third money token with a fourth money token to generate said first money token, the sum of the values of said third and fourth money tokens being equal to the value of said first money token.

According to a further aspect of the present invention, there is provided an electronic memory storing a first money token comprising at least data indicating an identifier of said first money token and an amount indicating a payment sum of said first money token, wherein said first money token further comprises an electronic watermark.

According to a further aspect of the present invention, there is provided a mobile electronic payment device comprising the above electronic memory and transmission circuitry for transmitting said first money token to an electronic receiving device to make a payment.

According to one embodiment, the mobile electronic payment device further comprises: reception circuitry adapted to receive a second money token; and a processor configured to generate said first money token based on said second money token.

According to a further aspect of the present invention, there is provided an electronic money payment system comprising: the above mobile electronic payment device; an electronic receiving device adapted to receive said first money token from said mobile electronic payment device; and an authentication module adapted to receive from said electronic receiving device said electronic watermark of said first money token and to decrypt said electronic watermark to verify that said first money token is authentic.

According to one embodiment, the electronic money payment system further comprises money token distribution equipment configured to generate said electronic watermark.

According to a further aspect of the present invention, there is provided an electronic data signal transmitting a money token comprising at least data indicating an identifier of said money token and an amount indicating a payment sum of said first money token, wherein said first money token further comprises an electronic watermark.

According to yet a further aspect of the present invention, there is provided a method of authenticating an electronic money token having an associated monetary value and comprising an electronic watermark, the method comprising: receiving at least an identifier and said electronic watermark of said electronic money token; decrypting the electronic watermark to determine an identifier associated with said watermark; and comparing said identifier associated with said watermark with the identifier of said electronic money token and outputting the result of said comparison.

## BRIEF DESCRIPTION OF THE DRAWINGS

The foregoing and other purposes, features, aspects and advantages of the present disclosure will become apparent from the following detailed description of embodiments, given by way of illustration and not limitation with reference to the accompanying drawings, in which:

Figure 1 (described above) illustrates an example of a system of electronic and cash payments;
Figure 2 illustrates a system for making payments using electronic money tokens according to an embodiment of the present disclosure;
Figure 3 illustrates an example of an electronic money token;
Figure 4 is a flow diagram illustrating steps in a method of performing an electronic payment using an electronic money token according to an embodiment of the present disclosure;
Figure 5 illustrates an electronic device according to an embodiment of the present disclosure; and
Figure 6 is a flow diagram illustrating a method of token authentication according to an embodiment of the present disclosure.

## DETAILED DESCRIPTION OF EMBODIMENTS OF THE PRESENT DISCLOSURE

Throughout the following, only those aspects useful for an understanding of the present disclosure have been illustrated in the drawing and described in detail. Other aspects, such as the particular implementations of encryption, decryption or authentication algorithms, will be apparent to those skilled in the art, and have not been described in detail.

Figure 2 illustrates an electronic payment system 200 according to one embodiment of the present disclosure.

System 200 comprises an electronic money token distribution equipment 202, which performs the role of generating and distributing electronic money tokens, of which one example of a money token 204 is provided in Figure 2. As will become clearer from the explanations below, the distribution equipment 202 may also periodically reinitiate the money tokens in circulation, and provide a service of verifying the money tokens upon request.

System 200 further comprises an electronic payment device 206 and electronic receiving devices 208 and 210. In this example, devices 206 and 208 are both mobile telephones, while device 210 is sales equipment, for example of a shop or restaurant.

The mobile device 206 receives the electronic money token 204 from the distribution equipment 202. For example, the user of device 206 connects, via the internet, to their bank account, and requests the electronic withdrawal of a certain sum. This request is then relayed to the distribution equipment 202, which for example generates the corresponding token 204 of an amount equal to the requested sum, as will be explained in more detail below, and transmits this token to device 206, for example after encrypting the token.

The mobile device 206 stores the electronic money token 204 in a memory (not shown in Figure 2). The money token 204 can subsequently be used to make a payment.

In one example, the mobile device 206 makes a payment to the user of the mobile device 208. This involves transmitting the electronic money token 204 from the memory of device 206 to the memory of device 208. After transmission from device 206, the money token 204 is for example deleted from the memory of device 206.

After receiving the electronic money token 204, the device 208 may optionally transmit at least part of the token to the distribution equipment 202 in order to verify its validity, as will be explained in more detail below.

Alternatively, rather than the electronic payment device 206 transmitting the money token 204 to the mobile device 208, it could make a payment to a merchant via the sales equipment 210. In particular, the token 204 is transmitted from the memory of device 206 to the equipment 210. The equipment 210 receives the token 204, and for example transmits at least part of the token to an authentication module 212 in order to verify that it is authentic. As will be described in more detail below, the money token 204 comprises a watermark, and the module 212 for example comprises circuitry 214 for decrypting the watermark, which is for example based on a hash function, to verify that the money token 204 is authentic. The watermark is for example generated and then encrypted by the distribution equipment 202, and the decryption algorithm of the watermark is for example not known by the devices 206, 208 nor the equipment 210, but only by the module 212 and the distribution equipment 202, as will be explained in more detail below. In some embodiments, the devices 206 and 208 may also include the same module 212 for verifying that the tokens they receive are authentic.

The communications between the distribution equipment 202 and device 206, between devices 206 and 208, between device 208 and distribution equipment 202, and between device 206 and the sales equipment 210, could each be via any of a number of interface types, for example a wireless connection, such as a Bluetooth connection or other NFC (near field communications) connection, a network connection via a mobile telecommunications network and/or a wireless internet connection via a wireless router. Alternatively, a wired connection could be established between any of the devices/equipment.

While in Figure 2, for clarity, the same token 204 has been represented as being transferred between the distribution equipment 202 and the mobile devices 206, 208 and sales equipment 210, in practise, the token 204 may be split to form sub-tokens of smaller value and/or combined with other tokens to form tokens of larger value by the payment device 206. Furthermore, while device 206 has been described as a payment device, it could of course also receive payments, from device 208 or equipment 210, and likewise device 208 and equipment 210 could make payments in a similar fashion to device 206.

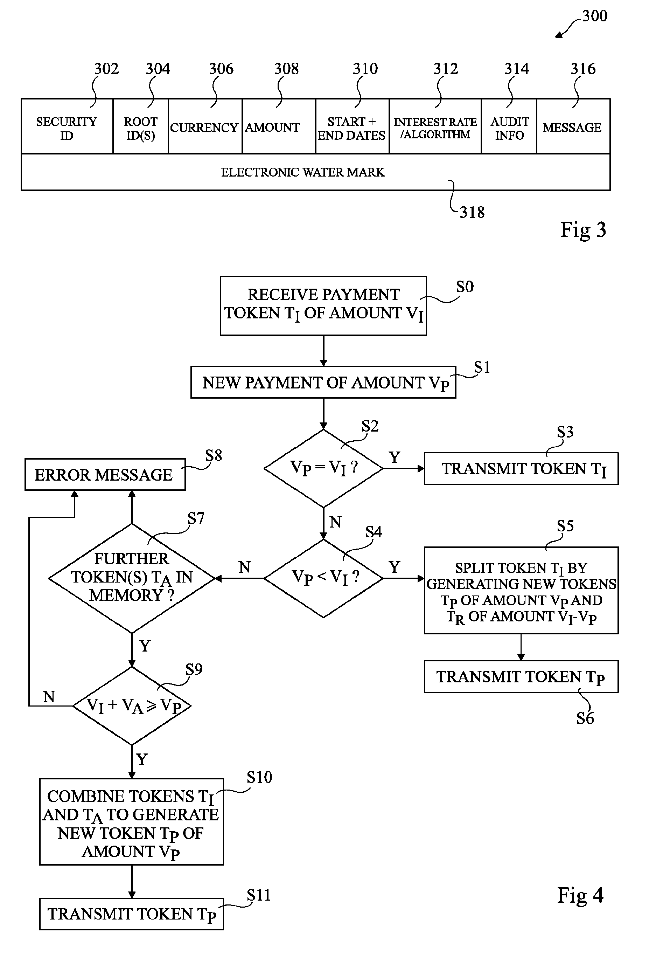

Figure 3 illustrates an example of a money token 300 according to one embodiment of the present disclosure. The money token 300 comprises electronic data divided into a number of data fields. The token 300 may be stored in any type of memory on a wide range of physical devices, including but not limited to memory cards and/or memory sticks including USB (universal serial bus) memory sticks, hard disk drives of PCs (personal computers) or laptop computers, Flash memory devices or other types of non-volatile memories in a range of devices including mobile telephones, PDA's (personal digital assistants), portable games consoles, etc. The data of the money token, including the electronic watermark described in more detail below, is for example encrypted, such that only certain devices are capable of decrypting the money token and accessing the data stored in its various data fields. Certain fields, such as the token value and the encrypted watermark, may be individually accessible without decrypting the money token, such that these fields can be read by certain devices without the need of decryption circuitry.

The token 300 comprises a field indicating an identifier 302 of the token, called in Figure 3 a security ID, which is for example a data value of 64 bits or greater indicating a unique reference of the token. In the case that the token is combined or split, a new security ID is generated for the one or more new tokens.

For example, in the case that a token is split, each of the new tokens has a security ID equal to the ID of the original token with an added suffix. Thus calling the original ID "XXXX", if this token is split into n tokens, these tokens could have security IDs "XXXX-1", "XXXX-2", etc. to "XXXX-n" respectively. Alternatively, if tokens are combined, the security ID of the new token for example equals a concatenation of the security IDs of each of the original tokens. For example, if tokens having IDs "XXXX" and "YYYY" respectively are combined, the new security ID is for example "XXXX-YYYY".

The token 300 also comprises a field 304 indicating one or more root IDs of the token. In particular, each time a token is split, a new security ID will be generated for each of the resulting tokens, and the security ID of the original token is for example stored as a root ID in each of the resulting tokens.

The token 300 also comprises a field 306 indicating the currency of the monetary value represented by the token, such as US Dollars, Euros, etc. During the lifetime of the token, it may be possible to perform a currency exchange of the money token, in which case this field would be updated.

The token 300 also comprises a field 308 indicating the amount of the monetary value represented by the token. For example, in some circumstances, tokens for amounts corresponding to standard bank notes could be issued, such as tokens for 5, 10, 20, 50 dollars/euros/pounds etc. In other cases, tokens could be issued directly having an amount corresponding to an intended transaction amount. In either case, after being issued, the tokens may be split or combined. Furthermore, as will be described in more detail below, the amount may be variable during the life of the money token.

The token 300 also comprises a field 310 indicating start and/or end dates of the token. For example, before the start date and/or after the end date, the token is not valid for use in payment transactions. If expired, the token can for example be reinitialized by the distribution equipment 202.

The token 300 also comprises a field 312 indicating an interest rate/algorithm that can be applied to the token. In this way, the amount of the token can be set to change in time, on certain future dates, or whenever the token amount is refreshed by a user. The interest rate could be a negative or positive fixed rate, or a variable rate that depends on information accessible by the electronic payment device storing the token. The field 312 may comprise an algorithm for periodically generating the new token value.

For example, using the interest rate, the algorithm could apply compound or simple interest. Compound interest is for example determined using the following algorithm:

$$V_n = V_{n-1}(1+i)p$$

where $V_{n-1}$ is the initial value of the token, $V_n$ is the new token value, i is the interest rate, which can be positive or negative, to be applied over a time period t, and p is the number of time periods t that have elapsed since the initialisation of the token, for example its start date.

Simple interest is for example determined using the following algorithm:

$$V_n = V_{n-1}(1+(p.i))$$

where $V_{n-1}$, $V_n$, i and p are as before.

Alternatively, the algorithm could apply a fixed or variable sum increment to the data value, determined as follows:

$$V_n = V_{n-1} + A$$

where $V_{n-1}$ and $V_n$ are as before, and A is a fixed or variable increment value, which could be positive or negative. It should be noted that in this case, the algorithm could be set to be applied only on certain dates. The increment A could be fixed, and for example stored in the field 312 of the money token 300. Alternatively, the increment A could depend on certain factors set by the token issuer, such as based on an inflation rate or the like.

As a further example, the algorithm could be based on a peg value, in other words being of the form:

$$V_n = V_{n-1}(C_n/C_{n-1})$$

where $V_{n-1}$ and $V_n$ are as before, $C_{n-1}$ is the previous peg value at the time that the previous data value $V_{n-1}$ was calculated, and $C_n$ is a current peg value, such that the value $V_n$ tracks the peg value. The peg value could be a commodity price, for example the price of gold or oil, an exchange rate, a stock market index, an inflation index etc.

The various variables used in the algorithms, such as the interest rate i, the increment value A and the peg value $C_n$, may be programmed, along with their evolution over time, when the token is issued by the distribution equipment 202. Alternatively or additionally, these variables could be updated during the lifetime of the token by sources defined by the distribution equipment 202, such as a stock exchange index at the end of each day, or they could be updated manually using any of the devices 206, 208, 210.

The token 300 also comprises a field 314 indicating audit information, such as the usage and history of the electronic money token, including for example information identifying the issuing institution, such as the distribution equipment 202.

The token 300 also comprises a message field 316, which for example indicates information inserted by the issuing institution, such as it electronic contact address, and/or information regarding promotions, vouchers etc.

The token 300 also comprises an electronic watermark 318, which is a data value generated by the token issuing institution, in this case the distribution equipment 202 of Figure 2, by applying a cryptographic function, such as a hash function, to at least some of the data fields 302 to 316 of the token. For example, the watermark is based at least on the security ID 302 of the token and/or on one of the root IDs 304. It could also be based on other fields of the token, such as the start and/or end dates 310, the interest rate and/or interest rate algorithm 312, currency 306 or the amount 308. In one example, the watermark 318 is generated by a hash function based on the security ID of the token and one or more of the other fields. After generation, the watermark is for example encrypted by an algorithm not based on keys and that may be decrypted only by distribution equipment 202 and authentication module 212. If the token 300 is subsequently split, the encrypted electronic watermark 318 forms part of each of the resulting tokens, and if the token 300 is combined with another, the new token will comprise the encrypted watermarks from each of the combined tokens. In that way, a token always comprises at least one watermark, the authentication of which can be checked, for example against the security ID of the token. Furthermore, when an original token is split or combined, the root IDs field 304 contains the security ID of the original token, which in combination with the electronic watermark can be used to authenticate the token.

When tokens are split or combined, the fields of the resulting tokens will grow, and in particular the security ID, root ID and audit information fields. The storage of the money token does not generally use much memory, but the size of the tokens could be periodically reduced by returning them to the distribution equipment 202 of Figure 2, which can re-issue them with an original security ID and a new watermark.

Figure 4 is a flow diagram showing steps in a method of making an electronic payment according to an embodiment of the present disclosure.

In a first step S0, an initial electronic money token $T_I$ of amount $V_I$ is received by an electronic payment device, such as device 206 of Figure 2, from a token issuing institution, for example the distribution equipment 202 of Figure 2.

In a next step S1, it is determined that a new payment of an amount Vp is to be made by the user of the electronic payment device. For example, the user is in a shop and makes a purchase of this amount, or the user wishes to pay somebody for a service. The payment amount is for example entered by the user into the electronic payment device, or alternatively, this information could be supplied automatically to the electronic payment device by an electronic receiving device, such as device 208 or 210 of Figure 2.

In a next step S2, the electronic payment device determines whether the amount Vp to be paid is equal to the amount $V_I$ of the money token $T_I$. For example, the token $T_I$ may have been issued specifically for the purpose of making the payment of amount Vp, in which case the amounts will match. Alternatively, the token $T_I$ could be for a set integer amount. While not illustrated in Figure 4, at the same time as verifying whether the amounts match, it can also be verified that the currencies of the amounts $V_I$ and Vp are the same. If not, the token amount $V_I$ could first be converted to the currency of the payment amount Vp, for example by applying an exchange rate retrieved from a remote source, for example via the internet, or entered manually into the sending or receiving device.

If the amounts $V_I$ and Vp are equal, the next step is S3, in which the token $T_I$ is transmitted to the electronic receiving device of the party receiving the funds. For example, a connection has already been established between the payment device and the receiving device, via a wired connection, or a wireless connection. Alternatively, the user of the electronic payment device may initiate the communication with the receiving device, such that the payment can be made.

Alternatively, if in step S2 it is determined that the amounts Vp and $V_I$ are not equal, the token $T_I$ can be split or combined with another in order to reach the payment amount Vp. In particular, a subsequent step S4 involves verifying whether Vp is less than $V_I$, again taking into account any exchange rate if the currencies are not the same.

If Vp is less than $V_I$, this implies that token $T_I$ can be split in order to make the payment. Thus, in a next step S5, the token $T_I$ is split into a new token Tp of amount Vp, and a new token $T_R$ of amount equal to $V_I$-Vp. The token Tp is then transmitted to the electronic receiving device in a step S6, and the token $T_R$ remains in the memory of the electronic payment device to be used for a future payment.

If in step S4 it is determined that Vp is not less than $V_I$, the next step is S7, in which it is determined whether or not there are one or more additional tokens $T_A$ stored by the electronic payment device that can be combined with the token $T_I$ to make the payment. If not, the next step is S8 in which an error message is for example displayed on a display of the electronic payment device, indicating that there are not sufficient funds to make the payment.

If there are one or more additional tokens $T_A$, the next step is S9, in which it is checked whether the sum of the amount $V_I$ with the amount $V_A$ of the one or more additional tokens is greater than or equal to Vp, again taking into account any exchange rate if the currencies are not the same. If the sum is not greater than or equal to Vp, the next step is S8, in which the error message may be indicated. Otherwise, if the sum is greater than or equal to Vp, the next step is S10.

In step 10, tokens are combined to generate a new token Tp of amount Vp. For example, if the sum of the amount $V_I$ with the amounts $V_A$ of the additional tokens is equal to Vp, then these tokens are simply combined. Alternatively, if the sum of the amount $V_I$ with the amounts $V_A$ of the additional tokens is greater than Vp, then one or more of the tokens $T_A$ is split to generate one or more tokens having a combined sum equal to Vp-$V_I$, which is then combined with token $T_I$ to generate the token Tp of value Vp. Combining tokens is optional, as in some cases more than one token can be transmitted in order to make the payment, in which case it is not necessary to combine tokens. Combining tokens can also be performed periodically for example to avoid large numbers of tokens of relatively small values from accumulating.

Then, in a next step S11, the token Tp is transmitted from the electronic payment device to the electronic receiving device to make the payment.

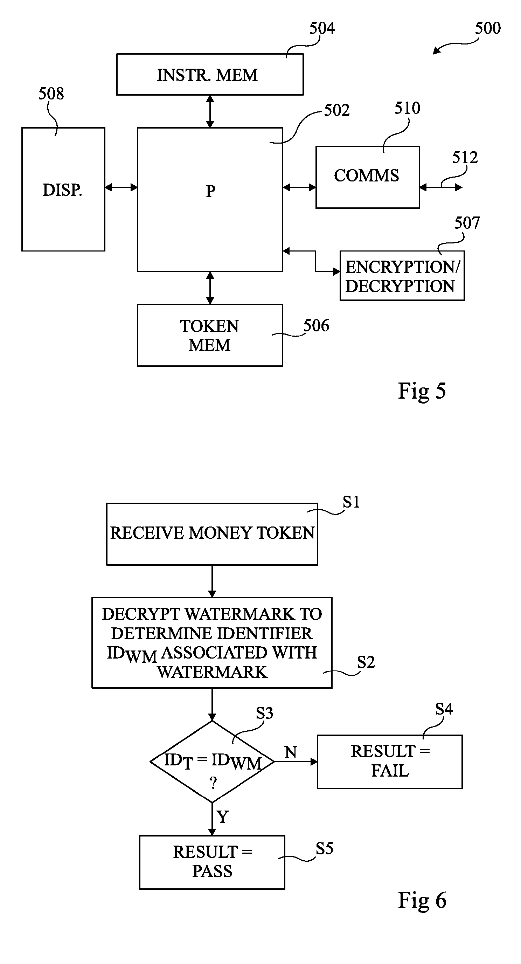

Figure 5 illustrates a device 500 implementing the electronic payment device 206 of Figure 2. A similar device can also be used to implement the electronic receiving device 208, the sales equipment 210 of Figure 2, and/or any other devices adapted to store money tokens as described herein.

The device 500 comprises a processing unit 502, coupled to an instruction memory 504, for example adapted to store instructions that, when executed by processor 502, cause some or all of the steps of Figure 4 to be implemented. Processor 502 is further coupled to a token memory 506, storing the electronic money tokens described herein. Memory 506 may be a dedicated memory, for example provided with protection mechanisms against fraudulent access to the information stored therein. Alternatively, the memory 506 could form part of a main memory of the device 500. Additionally, processor 502 is for example coupled to an encryption and decryption unit 507, which decrypts received tokens and encrypts tokens prior to transmission. The processor 502 is also coupled a display 508, which may be a touch sensitive display that also functions as an input means for a user to make selections. A communications interface 510 is also coupled to processor 502, allowing communications via an interface 512 with the token distribution equipment 202 of Figure 2 and with one or more electronic receiving devices to receive payments. For example, the interface 512 could be a wireless or wired interface, as described above with reference to Figure 2.

A verification of the electronic money token 204 can be performed by the distribution equipment 202 of Figure 2. For example, the device 208 or 210 may transmit the money token 204 to the distribution equipment 202. The distribution equipment 202 for example maintains a database storing a list of the money tokens that it has issued. Thus equipment 202 for example extracts the security ID 302 of the money token and/or the root ID 304 of the money token, and verifies whether or not it issued this token. If it did issue the money token, or a root token from which the money token is derived, equipment 202 may also verify one or more other fields of the money token that should not have changed, such as the algorithm field 312, start and end dates 310, etc.

Alternatively or additionally, the money token may be authenticated based on its watermark, as will not be described with reference to Figure 6.

Figure 6 is a flow diagram illustrating steps in a method of authenticating a money token according to one embodiment.

In a first step S1, the money token is received by an authentication module, such as module 212 of Figure 2. The authentication module extracts an identifier $ID_T$, such as the security ID, of the money token, and also the encrypted watermark associated with the money token.

In a next step S2, the electronic watermark is decrypted, and based on the decrypted watermark, at least an identifier $ID_{WM}$ associated with the electronic watermark is determined. For example, the electronic watermark of the token is generated by applying a hash function to one or more data fields of the money token. Such a function for example does not use an encryption key. As an example, the digits of the security ID and/or root ID and/or other fields of the original money token are summed and/or multiplied together to generate a hash total. Depending on the information used to generate the electronic watermark as mentioned above, other data associated with the token may also be determined, such as the amount of the token.

In a next step S3, the identifiers $ID_T$ and $ID_{WM}$ are compared, and if they do not match, the next step is S4, in which the authentication module returns a "fail" message, indicating that the authentication failed, and that the money token should therefore be considered invalid. Alternatively, if the identifiers match, the next step is S5, in which the authentication module returns a "pass" message, indicating that the money token is valid. If decrypting the watermark allows any of the other data fields of the money token to be determined, such data can also be verified in step S3.

In some cases, the watermark may be based on fields of the money token that vary, for example the amount of the money token. This data can also be verified if for example information is available on how the data should have varied since the original watermark was generated.

An advantage of the embodiments described herein is that an electronic form of payment can be implemented that does not use a clearing mechanism and settlement to be transferred from one party to another. Furthermore, such a payment token is particularly versatile, being capable of being split or combined without security risks thanks to the electronic watermark issued with each token.

Furthermore, an advantage of the electronic money token described herein is that it can have a dynamically changing value.

While a number of particular embodiments have been described herein, it will be apparent to those skilled in the art that numerous variations and alternatives could be applied.

For example, it will be apparent to those skilled in the art that the data fields of the token shown in Figure 3 are merely one example, and that a token could comprise fewer or more data fields, and the data fields may or may not be encrypted.

Furthermore, while some examples of operations for splitting and combining tokens to obtain a payment value have been provided, it will be apparent to those skilled in the art that there are numerous alternative operations that could be applied.

**Claims**

1.  A method of making an electronic payment by an electronic payment device comprising:

    transmitting from said electronic payment device (206) to an electronic receiving device (208, 210) a first money token (204) comprising at least data indicating an identifier (302) of said first money token and an amount (308) indicating a payment sum of said first money token, wherein said first money token further comprises an electronic watermark (318).

2.  The method of claim 1, wherein said first money token comprises an algorithm that determines said payment amount of said first money token based on at least one parameter external to said first money token.

3. The method of claim 1 or 2, wherein said electronic watermark comprises data of said first money token encrypted by an algorithm not known by said electronic payment and electronic receiving devices.

4. The method of any of claims 1 to 3, further comprising:

transmitting by said electronic receiving device said electronic watermark to an authentication module (202, 212); and
decrypting said electronic watermark by said authentication module to verify that said first money token is authentic.

5. The method of claim 4, wherein decrypting said electronic watermark comprises performing a hash function.

6. The method of any of claims 1 to 5, further comprising, prior to transmitting said money token, the step of:

splitting by said electronic payment device a second money token to generate said first money token and a third money token having a value equal to the difference between said first payment sum and a value of said second token.

7. The method of claim 6, wherein splitting said second money token comprises including in said first and third money tokens an identifier of said second money token and an electronic watermark of said second money token.

8. The method of claim 6 or 7, further comprising receiving by said electronic payment device said second money token from token distribution equipment (202).

9. The method of claim 6 or 7, further comprising generating said second money token by combining fourth and fifth money tokens.

10. The method of any of claims 1 to 5, further comprising splitting a second money token to generate a third money token, and combining said third money token with a fourth money token to generate said first money token, the sum of the values of said third and fourth money tokens being equal to the value of said first money token.

11. An electronic memory (506) storing a first money token comprising at least data indicating an identifier (302) of said first money token and an amount (308) indicating a payment sum of said first money token, wherein said first money token further comprises an electronic watermark (318).

12. A mobile electronic payment device comprising the electronic memory of claim 11 and transmission circuitry (510) for transmitting said first money token to an electronic receiving device (208, 210) to make a payment.

13. The mobile electronic payment device of claim 12, further comprising:

reception circuitry (510) adapted to receive a second money token; and
a processor (502) configured to generate said first money token based on said second money token.

14. An electronic money payment system comprising:

the mobile electronic payment device of claim 12 or 13;
an electronic receiving device (508, 510) adapted to receive said first money token from said mobile electronic payment device; and
an authentication module (202, 212) adapted to receive from said electronic receiving device said electronic watermark of said first money token and to decrypt said electronic watermark to verify that said first money token is authentic.

15. The electronic money payment system of claim 13, further comprising money token distribution equipment (202) configured to generate said electronic watermark.

16. An electronic data signal transmitting a money token comprising at least data indicating an identifier (302) of said money token and an amount (308) indicating a payment sum of said first money token, wherein said first money token further comprises an electronic watermark (318).

17. A method of authenticating an electronic money token having an associated monetary value and comprising an electronic watermark, the method comprising:

receiving at least an identifier (302) and said electronic watermark (318) of said electronic money token;
decrypting the electronic watermark to determine an identifier associated with said watermark; and
comparing said identifier associated with said watermark with the identifier of said electronic money token and outputting the result of said comparison.

**Amended claims in accordance with Rule 137(2) EPC.**

**1.** A method of making an electronic payment by an electronic payment device comprising:

transmitting from said electronic payment device (206) to an electronic receiving device (208, 210) a first money token (204) comprising at least data indicating an identifier (302) of said first money token and an amount (308) indicating a payment sum of said first money token, wherein said first money token further comprises an electronic watermark (318) comprising data of said first money token encrypted by an algorithm not known by said electronic payment and electronic receiving devices.

**2.** The method of claim 1, wherein said first money token comprises an algorithm that determines said payment amount of said first money token based on at least one parameter external to said first money token.

**3.** The method of claim 1 or 2, wherein said algorithm is not based on keys.

**4.** The method of any of claims 1 to 3, further comprising:

transmitting by said electronic receiving device said electronic watermark to an authentication module (202, 212); and decrypting said electronic watermark by said authentication module to verify that said first money token is authentic.

**5.** The method of claim 4, wherein decrypting said electronic watermark comprises performing a hash function.

**6.** The method of any of claims 1 to 5, further comprising, prior to transmitting said money token, the step of:

splitting by said electronic payment device a second money token to generate said first money token and a third money token having a value equal to the difference between said first payment sum and a value of said second token.

**7.** The method of claim 6, wherein splitting said second money token comprises including in said first and third money tokens an identifier of said second money token and an electronic watermark of said second money token.

**8.** The method of claim 6 or 7, further comprising receiving by said electronic payment device said second money token from token distribution equipment (202).

**9.** The method of claim 6 or 7, further comprising generating said second money token by combining fourth and fifth money tokens.

**10.** The method of any of claims 1 to 5, further comprising splitting a second money token to generate a third money token, and combining said third money token with a fourth money token to generate said first money token, the sum of the values of said third and fourth money tokens being equal to the value of said first money token.

**11.** An electronic memory (506) storing a first money token comprising at least data indicating an identifier (302) of said first money token and an amount (308) indicating a payment sum of said first money token, wherein said first money token further comprises an electronic watermark (318) comprising data of said first money token encrypted by an algorithm not based on keys.

**12.** A mobile electronic payment device comprising the electronic memory of claim 11 and transmission circuitry (510) for transmitting said first money token to an electronic receiving device (208, 210) to make a payment.

**13.** The mobile electronic payment device of claim 12, further comprising:

reception circuitry (510) adapted to receive a second money token; and a processor (502) configured to generate said first money token based on said second money token.

**14.** An electronic money payment system comprising:

the mobile electronic payment device of claim 12 or 13; an electronic receiving device (508, 510) adapted to receive said first money token from said mobile electronic payment device; and an authentication module (202, 212) adapted to receive from said electronic receiving device said electronic watermark of said first money token and to decrypt said electronic watermark to verify that said first money token is authentic.

**15.** The electronic money payment system of claim 13, further comprising money token distribution equipment (202) configured to generate said electronic watermark.

**16.** An electronic data signal transmitting a money token comprising at least data indicating an identifier (302) of said money token and an amount (308) indicating a payment sum of said money token, wherein said money token further comprises an electronic watermark (318) comprising data of said money token encrypted by an algorithm not based on keys.

**17.** A method of authenticating an electronic money token having an associated monetary value and comprising an electronic watermark comprising data of said money token encrypted by an algorithm not based on keys, the method comprising:

> receiving at least an identifier (302) and said electronic watermark (318) of said electronic money token;
> decrypting the electronic watermark to determine an identifier associated with said watermark; and
> comparing said identifier associated with said watermark with the identifier of said electronic money token and outputting the result of said comparison.

Fig 1

Fig 2

300

| SECURITY ID | ROOT ID(S) | CURRENCY | AMOUNT | START + END DATES | INTEREST RATE /ALGORITHM | AUDIT INFO | MESSAGE |
|---|---|---|---|---|---|---|---|
| 302 | 304 | 306 | 308 | 310 | 312 | 314 | 316 |

ELECTRONIC WATER MARK

318

Fig 3

RECEIVE PAYMENT TOKEN $T_I$ OF AMOUNT $V_I$ — S0

NEW PAYMENT OF AMOUNT $V_P$ — S1

S2 — $V_P = V_I$ ? — Y → TRANSMIT TOKEN $T_I$ — S3

N

S4 — $V_P < V_I$ ? — Y → SPLIT TOKEN $T_I$ BY GENERATING NEW TOKENS $T_P$ OF AMOUNT $V_P$ AND $T_R$ OF AMOUNT $V_I$-$V_P$ — S5

TRANSMIT TOKEN $T_P$ — S6

N

S7 — FURTHER TOKEN(S) $T_A$ IN MEMORY ? — N → ERROR MESSAGE — S8

Y

S9 — $V_I + V_A \geqslant V_P$ ? — N → ERROR MESSAGE

Y

COMBINE TOKENS $T_I$ AND $T_A$ TO GENERATE NEW TOKEN $T_P$ OF AMOUNT $V_P$ — S10

TRANSMIT TOKEN $T_P$ — S11

Fig 4

Fig 5

Fig 6

Europäisches
Patentamt

European
Patent Office

Office européen
des brevets

# EUROPEAN SEARCH REPORT

Application Number

EP 11 30 5821

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/282674 A1 (SAITO MAKOTO [JP]) 14 December 2006 (2006-12-14) * abstract; figures * * paragraphs [0003], [0026] - [0033], [0040], [0041] * | 1-17 | INV. G06Q20/00 |
| A | US 2008/056531 A1 (ZHAO JIAN [US]) 6 March 2008 (2008-03-06) * abstract; figures * | 1-17 | |
| A | US 6 119 946 A (TEICHER MORDECHAI [IL]) 19 September 2000 (2000-09-19) * abstract; figures * | 1-17 | |
| A | US 2007/034684 A1 (UMEYA MASARU [JP] ET AL) 15 February 2007 (2007-02-15) * abstract; figures * | 1-17 | |
| A | WO 2005/109359 A1 (WEB DE AG [DE]; COTTE PIERRE-ALAIN [DE]; GREVE MICHAEL [DE]) 17 November 2005 (2005-11-17) * abstract; figures * | 1-17 | TECHNICAL FIELDS SEARCHED (IPC) G06Q |

The present search report has been drawn up for all claims

| Place of search | Date of completion of the search | Examiner |
|---|---|---|
| The Hague | 25 October 2011 | Breugelmans, Jan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 11 30 5821

This annex lists the patent family members relating to the patent documents cited in the above-mentioned European search report.
The members are as contained in the European Patent Office EDP file on
The European Patent Office is in no way liable for these particulars which are merely given for the purpose of information.

25-10-2011

| Patent document cited in search report | | Publication date | Patent family member(s) | | Publication date |
|---|---|---|---|---|---|
| US 2006282674 | A1 | 14-12-2006 | NONE | | |
| US 2008056531 | A1 | 06-03-2008 | NONE | | |
| US 6119946 | A | 19-09-2000 | AU | 739937 B2 | 25-10-2001 |
| | | | AU | 6744598 A | 22-10-1998 |
| | | | CA | 2285401 A1 | 08-10-1998 |
| | | | CN | 1259215 A | 05-07-2000 |
| | | | EP | 1021800 A1 | 26-07-2000 |
| | | | JP | 2001525087 A | 04-12-2001 |
| | | | RU | 2187150 C2 | 10-08-2002 |
| | | | US | 6119946 A | 19-09-2000 |
| | | | WO | 9844429 A1 | 08-10-1998 |
| US 2007034684 | A1 | 15-02-2007 | CN | 1777911 A | 24-05-2006 |
| | | | EP | 1632888 A1 | 08-03-2006 |
| | | | US | 2007034684 A1 | 15-02-2007 |
| | | | WO | 2004097701 A1 | 11-11-2004 |
| WO 2005109359 | A1 | 17-11-2005 | NONE | | |

EPO FORM P0459

For more details about this annex : see Official Journal of the European Patent Office, No. 12/82